# EUROPEAN PATENT APPLICATION

(11) **EP 3 800 162 A1**
(43) Date of publication of application: **07.04.2021**
(21) Application number: 20175398.5
(22) Date of filing: 03.12.2010
(51) Int. Cl.: C01B 3/38

(54) **PRODUCTION OF A MIXTURE OF HYDROGEN AND NATURAL GAS**

(30) Priority: 18.12.2009 IN 2656DE2009
(62) Divisional of application: 10837170.9
(71) Applicant: Indian Oil Corporation Limited, Faridabad 121 007, Haryana (IN)
(72) Inventor: Kumar, Anad, 121 007 Faryana (IN); Malhotra, Kumar Ravinder, 121 007 Haryana (IN); Rajagopal, Santanam, 121 007 Faryana (IN); Kumar, Brijesh, 121 007 Faryana (IN); Sharma, Alok, 121 007 Faryana (IN); Badhe, Muralidhar Rajesh, 121 007 Faryana (IN); Singh, Rajesh, 121 007 Faryana (IN)
(74) Representative: Høiberg P/S

(57) **Abstract**

The present subject matter relates to a process of reforming a natural gas stream by steam. The reforming is carried out at a temperature within a predetermined range to form a substantially carbon monoxide free product mixture of hydrogen and natural gas. The reforming is carried out in presence of a nickel-based catalyst. The temperature is controlled in a range of about 350°C to about 390°C. The reforming can be started or stopped or its rate can be varied, based on an outflow demand of the product mixture of hydrogen and natural gas.

## Description

### TECHNICAL FIELD

The present subject matter relates, in general, to natural gas fuel and, in particular, to production of a mixture of hydrogen and natural gas.

### BACKGROUND

Petroleum fuels have been predominantly used in automobiles so far. However, these fuels have a limited resource, and they also produce high levels of emissions. To overcome these challenges, alternative sources of fuel are being explored and' tested. Natural gas is one such popular alternative. Although natural gas is regarded as a clean fuel, nitrous oxide (NO_{X}) emissions are still high in this type of fuel. NO_{X} emissions from the combustion of natural gas can be brought down by mixing certain quantity of hydrogen, preferably about 10 to 20% by volume, into the natural gas.

Conventionally, hydrogen is produced separately and is later blended with the natural gas to produce an optimum mixture. Hydrogen is produced by employing any of the known processes in the art such as water electrolysis and steam methane reforming (SMR). In the SMR process, natural gas, also referred to as methane, is reformed to produce syngas, which is then converted into carbon dioxide and hydrogen. The process is carried out under extreme operating conditions, i.e., about 20 to 30 bars of pressure and about 850°C to 950°C of temperature. Electrolysis involves producing hydrogen from water through electric current

However, said methods of producing hydrogen are costly and increase the overall cost of production of the hydrogen-natural gas mixture. Further, storage and transportation of hydrogen is hazardous, in addition to being expensive, considering the inflammable nature of the gas.

In another conventional method, natural gas is directly converted into a mixture of hydrogen and natural gas. In particular, controlled reforming of methane with steam is carried out at a temperature in the range of about 400°C to 500°C and pressure of about 1 to 5 atm. Moreover, the reforming takes place in the presence of a catalyst, of which palladium, which is an expansive metal of the platinum group, is an essential component. In addition, the product mixture produced from this method contains carbon monoxide, which is an undesired by-product of the process, and which has to be removed before the product mixture can be used as fuel.

### SUMMARY

The subject matter described herein is directed to a process for the production of a mixture of hydrogen and natural gas. The process, according to an embodiment of the present subject matter, is carried out at relatively mild operating conditions, i.e. at a lower temperature than the conventional processes. These conditions can be achieved by a relatively less complicated process in a chemical plant. In addition, the product gas mixture obtained from the process described herein is substantially free from carbon monoxide and, therefore, can be used as a fuel in automobiles, directly, after compression. The present subject matter further relates to a plant in which the process to produce the mixture of hydrogen and natural gas can be carried out.

The process comprises reforming a stream of natural gas or methane in the presence of steam. The reforming takes place at substantially low temperatures, i.e. around 350°C to 390°C, and in the presence of a nickel-based catalyst. The temperature range is lower than what is employed in the conventional processes, and can be achieved easily in a chemical plant. In one implementation, the nickel-based catalyst includes nickel, nickel oxide, magnesium oxide, and silica. The nickel-based catalyst is industrially available and inexpensive.

In one embodiment of the present subject matter, the reforming of the stream of natural gas is carried out inside a reformer, which can be, for example, a fixed-bed down-flow vapour phase reformer. In operation, a natural gas stream is first preheated and purified to remove impurities like hydrogen sulphide. The natural gas stream can be preheated through heat exchange with the product-gas mixture obtained after reforming.

The product-gas mixture produced by the process can be adjusted to a predetermined level by varying the quantity of the natural gas intake in the reformer. Based on an outflow demand of the product gas mixture, a portion of the product gas mixture can be recycled. In addition, an inlet water flow rate can also be controlled, based on the outflow demand. When there is no demand of the product gas mixture, the natural gas is entirely recycled and water injection is completely stopped.

These and other features, aspects, and advantages of the present subject matter will be better understood with reference to the following description and appended claims. This summary is provided to introduce a selection of concepts in a simplified form. This summary is not intended to identify key features or essential features of the claimed subject matter, nor is it intended to be used to limit the scope of the claimed subject matter.

### BRIEF DESCRIPTION OF DRAWINGS

The above and other features, aspects, and advantages of the subject matter will be better understood with regard to the following description, appended claims, and accompanying drawings, where:
**Figure 1** schematically represents different components of a plant in which a mixture of hydrogen and natural gas is produced, according to one embodiment of the present subject matter.
**Figure 2** outlines an exemplary process to produce the mixture of hydrogen and natural gas, according to one implementation of the present subject matter.
**Figure 3** shows a table representing data pertaining to experiments that are carried out for the process, according to one implementation of the present subject matter.

### DETAILED DESCRIPTION

A process to produce a mixture of hydrogen and natural gas that can be used as a fuel in automobiles is described herein. The automobiles using this mixture of hydrogen and natural gas show low levels of emissions, including NO_{X} emissions. Moreover, the process is substantially a single step process, thereby reducing both cost and complexity involved.

The process involves controlled reforming of a natural gas stream using steam and in the presence of a nickel-based catalyst. The reforming takes place at a controlled temperature in the range of about 350oC to about 390oC and at a pressure in the range of about 5 to 7 bars. The nickel-based catalyst is a readily available industrial catalyst, and thus reduces the operating cost. In one implementation, the nickel-based catalyst includes nickel, nickel oxide, magnesium oxide, and silica.

The product mixture obtained after reforming is substantially free from carbon monoxide. Hence, the mixture needs no further treatment and, therefore, can be used directly as fuel, after being compressed to a desired pressure level, in automobiles. Moreover, during the process, the natural gas stream is preheated by exchanging heat with the product gas mixture obtained after the reforming of the natural gas stream. Hence, energy within the system is well utilized, thereby improving the process efficiency and cost effectiveness.

The present subject matter also describes a set up of a plant in which the above said process can be carried out. In such a plant, the mixture of natural gas and hydrogen can be produced on a small scale, for example, for distribution at a retail outlet, as well as on a large scale for distribution to such smaller retail outlets.

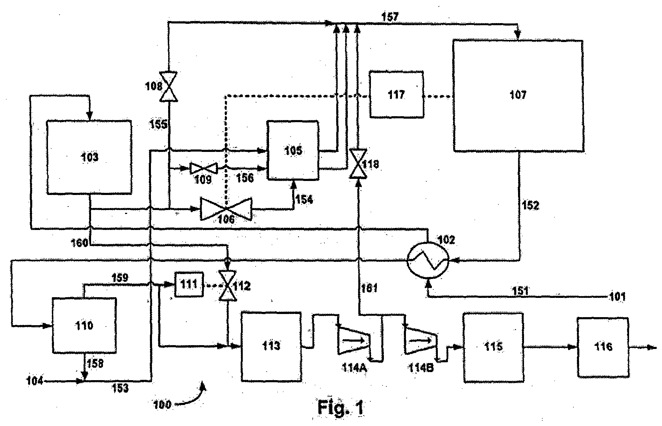

**Figure 1** schematically represents different components of a plant **100** for producing a mixture of hydrogen and natural gas, according to one embodiment of the present subject matter. In an implementation, at least one natural gas stream is fed to the plant **100** through a natural gas inlet **101.** The natural gas stream is transported to an impurity removal unit **103** via an inlet natural gas line **151.**

Before getting terminated in the impurity removal unit **103,** the inlet natural gas line **151** passes through a heat exchanger **102,** where the natural gas stream in the inlet natural gas line **151** is preheated. In an implementation, preheating of the natural gas stream in the heat exchanger **102** involves heating of the natural gas stream by a stream of a product gas mixture obtained after reforming. The stream of the product gas mixture is carried to the heat exchanger **102** via a product gas mixture line **152.**

The natural gas stream may contain impurities, such as hydrogen sulphide, which are removed in the impurity removal unit **103.** The impurity removal unit **103** can contain a substance that adsorbs hydrogen sulphide. In one embodiment, the impurity removal unit **103** is a sulphur guard reactor. In this way, a preheated and purified natural gas stream, referred to as a treated natural gas stream.

Steam that is to be used in the reforming is produced by heating an amount of water that is fed to the plant **100** from a water inlet **104.** The water is carried to a heating unit **105** via a water line **153.** In one embodiment, the heating unit **105** is a firebox, which is operated by burning a slip stream of the treated natural gas stream. A slip control valve **106** controls a flow rate of the slip stream. The slip stream is carried to the heating unit **105,** via a slip stream line **154.** At the heating unit **105,** the treated gas stream is burnt to heat the water present in the heating unit **105** and produce steam.

Another portion of the treated natural gas stream obtained from the impurity removal unit **103** is reformed to produce the product gas mixture. This portion of the treated natural gas is carried by a main natural gas line **155.** In an implementation, a flow rate of the treated natural gas in the main natural gas line **155** can be regulated by a main control valve **108.** Further, a portion of the treated natural gas from the main natural gas line **155** is sent to the heating unit **105** through a line **156.** This portion of the treated natural gas is heated in the heating unit **105.** The flow of this portion of the treated natural gas can be regulated by a control valve **110.** Further, the steam generated in the heating unit **105** is mixed with the treated natural gas in the main natural gas line **155,** and the mixture is carried to a reformer **107** via a combined natural gas and steam line **157.** The portion of the natural gas heated in the heating unit **105** is also mixed with the treated natural gas and steam in the combined natural gas and main natural gas line **157.**

In one embodiment, the reformer **107** can be a fixed-bed down-flow vapour phase reformer. The temperature inside the reformer **107** can be in the range of about 350°C to 390°C and the pressure in the range of about 5 to 7 bars. Under these reaction conditions, a part of the treated natural gas is reformed to produce the product gas mixture. In an implementation, a catalyst, for example, a nickel-based catalyst, can be used to reform the natural gas. The product gas mixture can have about 10 to 20% of hydrogen by volume and about 70 to 85% of natural gas by volume.

In another embodiment, the slip control valve **106,** which controls the flow rate of the slip stream in the slip stream line **154,** is regulated by a temperature indicator controller **117.** The temperature indicator controller **117** detects a temperature inside the reformer **107** and, based on the detection, directs the slip control valve **106** to control the flow rate of the slip stream.

The product gas mixture is carried via the product gas mixture line **152** to a condensing unit **110.** In between, the product gas mixture line **152** passes through the heat exchanger **102** to heat up the natural gas inside the inlet natural gas line **151,** as described earlier. The condensing unit **110** separates excess steam from the product gas mixture and condenses the steam to produce water and a dry product gas. The water obtained from the condensing unit **110** is fed to the water line **153** via a condensate line **158.**

The dry product gas from the condensing unit **110** is carried via a dry product gas line **159** to a gas analyzer I11. The gas analyzer **111** analyzes the composition of the dry product gas. Based on the analysis of the composition of the dry product gas, if required, an additional quantity of the treated natural gas from the impurity removal unit **103** can be added to the dry product gas, via an adjusting natural gas line **160.** The additional quantity of the treated natural gas can be regulated by an adjusting control valve **112.** The adjusting control valve is directed by the gas analyzer **111.**

In one embodiment, the inflow of natural gas and steam into the reformer **107** is regulated so that the dry product gas from the condensing unit **110** contains less than a pre-determined level of natural gas. This ensures that the product gas composition, after mixing the additional quantity of natural gas, is an optimum composition having desired levels of hydrogen and natural gas, based on a requirement of the fuel. The composition of the final product gas mixture can vary between 15 to 20% of hydrogen by volume and 75 to 90% of natural gas by volume.

The final product gas mixture can be directly stored in a low pressure storage **113** and can also be compressed further through a compression system for directly using as an automobile fuel. In an implementation, the compression of the final product gas mixture can be carried out through two compression stages, **114A** and **114B,** with a compression ratio of about 5 to 6 in both the stages. Following the compression, the final product gas mixture can be stored in a high pressure storage 115. This compressed final product gas mixture can be directly dispensed info the automobiles through a dispenser **116.**

Based on an outflow demand, a portion of the final product gas mixture can be recycled to the reformer **107** via a recycling line **161.** In an implementation, the quantity of the final product gas mixture in the recycling line can be controlled by a recycling control valve **118.**

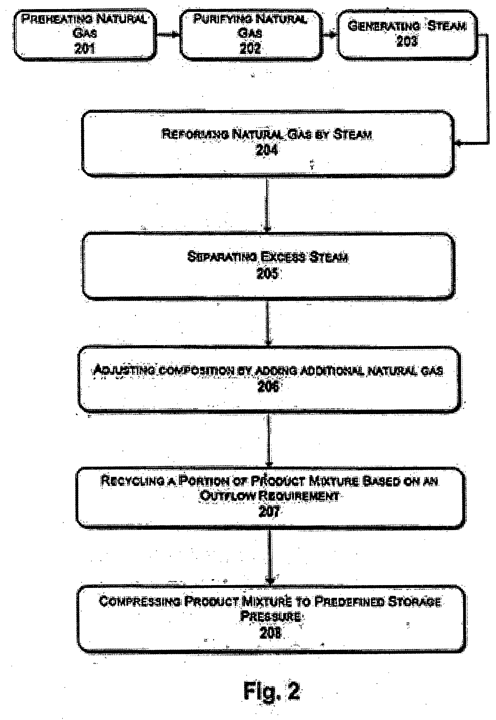

Figure 2 represents the process to produce a mixture of hydrogen and natural gas, according to one implementation of the present subject matter. The order in which the method blocks are described is not intended to be construed as a limitation, and any number of the described method blocks can be combined in any order to implement the method, or an alternate method. Additionally, individual blocks may be deleted from the method without departing from the spirit and scope of the subject matter described herein.

At block 201, the inlet natural gas is preheated. Preheating can be carried out using a product gas mixture obtained after reforming the natural gas. The product mixture is at a higher temperature than the inlet natural gas, and the heat of the product mixture is utilized in preheating the inlet natural gas.

After preheating, at block **202,** the natural gas is purified by removing impurities like hydrogen sulphide. In one implementation, the purification involves adsorbing hydrogen sulphide by an appropriate substance.

The reforming of the natural gas, as described later, is carried out by steam. The steam required for the reforming of the natural gas is generated in a steam generating process, at block 203. A part of the natural gas obtained after the purifying step, at block **202,** can be used as fuel to heat water. Along with the steam generation, a part of the natural gas to be reformed can a so be heated.

At block **204,** the natural gas obtained after purifying at block **202,** is reformed by the steam generated at the block **203,** in the presence of a nickel-based catalyst. The reforming of the natural gas is carried out at within a controlled temperature range. In an implementation, the controlled temperature range is about 350°C to 390°C. The pressure to be maintained during the reforming can be maintained in a range of about 5 to 7 bars. In one implementation, the nickel- based catalyst comprises nickel, nickel oxide, magnesium oxide, and silica. Reaction at these conditions leads to the formation of a product gas mixture that is substantially free from carbon monoxide. Further, a gas hourly space velocity on dry basis in a range of about 1500 hr-1 to 2250 hr-1 can be maintained during the reforming.

The reforming of the natural gas takes place through following reaction steps:

CH₄ + H₂O → CO + 3 H₂ (1)

CO + H₂O → CO₂ + H₂ (2)

The natural gas, that is, methane, is reformed by steam to produce carbon monoxide in reaction (1). However, carbon monoxide gets converted to carbon dioxide during reaction (2). The reaction (2) is also termed as water-gas shift reaction. This reaction proceeds predominantly in a forward direction under the reaction conditions as disclosed earlier. Hence, almost all of the carbon monoxide produced as an intermediate product is converted into carbon dioxide, and thereby the product gas mixture gets substantially free from carbon monoxide.

At block **205,** the product gas mixture obtained after reforming the natural gas is condensed to separate excess steam. The water obtained as a condensate, along with the inlet water, is again heated in the steam generating process at block **203** to generate steam. After separating the excess steam, a dry product gas mixture is obtained whose composition is adjusted at block **206.**

At block **206,** the composition of the dry product gas mixture is analyzed and, based on the analysis, an additional quantity of the treated natural gas obtained after the purifying, at the block **202,** is added to the dry product gas mixture to obtain a final product gas mixture having a desired composition of hydrogen and natural gas.

A portion of the final product gas mixture, obtained after the composition is adjusted, is recycled, at block **207.** The quantity of the natural gas that is recycled is based on an outflow demand of the product gas. A quantify of the inlet water that is used for steam generation in the steam generating process is also based on the outflow demand of the product gas.

When the outflow demand is low, the quantity of the inlet water is proportionately low.
When there is no outflow demand, supply of the inlet water is completely stopped and the product gas mixture is entirely recycled. Hence, the process can be started and stopped easily, or its rate can be varied depending on the demand of the product gas.

The product gas having an appropriate composition can be compressed, at block **208.** The compressed product gas hence obtained can be directly used as a fuel in automobiles.

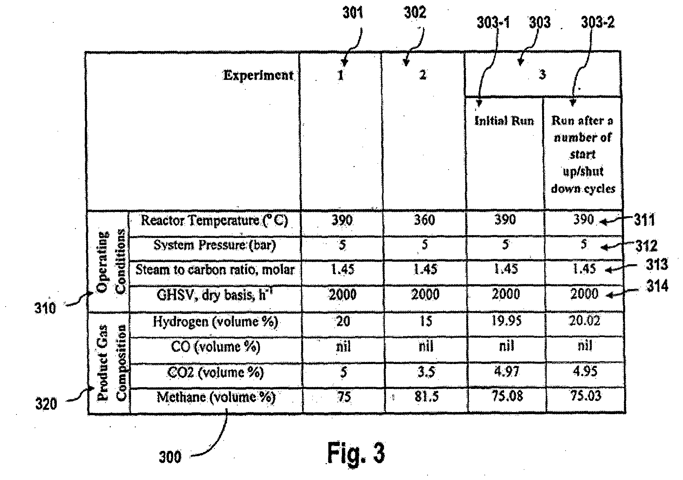

**Figure 3** represents a table **300** illustrating the process of producing a mixture of hydrogen and natural gas as described above, by means of examples. The examples relate to experiments conducted to obtain the mixture of hydrogen and natural gas. However, it will be appreciated that the process is not limited to these experiments only, and different reaction conditions leading to different compositions in the product gas mixture can be conceived.

The table **300** has two sets of rows: **310** and **320.** The set of rows **310** represents operating conditions under which the experiments are carried out, while the set of rows **320** represents compositions of different gases in the product gas mixture obtained as a result of the experiments. The table **300** includes data from three experiments, represented by column **301,** column **302,** and column **303.**

All the three experiments were carried out in a fixed-bed down-flow vapour phase reformer. Experiment 1 and experiment 2 were carried out in the presence of **100** cc of a nickel¬based catalyst, as described in the description of Fig. 1. Experiment 3 is carried out in the presence of 10 cc of the nickel-based catalyst. A sulphur guard catalyst bed is used to remove impurities like hydrogen sulphide in all the three experiments. The experiment 3 is carried out with a certain number of start-up and shut down cycles of the plant, wherein the product gas mixture is recycled, for example, as described at block **207** (shown in Figure 2), during the shut-down period.

Column **303-1** represents data for an initial run of the experiment 3, whereas column **303-2** represents data after a number of start-up and shut down cycles of the plant. Further, row **311** represents temperature values whereas row **312** represents pressure values in the reformer at which the experiments are carried out. Also, row **313** represents steam to carbon molar ratio and row 314 represents a gas hourly space velocity. As it can be seen, in all the three experiments, the product gas mixture is substantially free of carbon monoxide.

Although the subject matter has been described in considerable detail with reference to certain preferred embodiments thereof, other embodiments are possible. As such, the spirit and scope of the appended claims should not be limited to the description of the preferred embodiment contained therein.

### Items

1. A process comprising:
   - reforming a natural gas stream by steam in presence of a nickel-based catalyst, wherein the reforming is carried out within a controlled temperature, range to form a product mixture of hydrogen and natural gas such that the product mixture is substantially free from carbon monoxide; and
   - removing excess steam from the product mixture.
2. The process according to item 1 comprising purifying the natural gas stream.
3. The process according to item 1, wherein the reforming is carried out at a temperature in a range of about 350°C to 390°C.
4. The process according to item 1, wherein the reforming is carried out at a pressure in a range of about 5 bars to 7 bars.
5. The process according to item 1, wherein the reforming is carried out at a gas hourly space velocity on dry basis in a range of about 1500 hr⁻¹ to 2250 hr⁻¹.
6. The process according to item 1, wherein the nickel-based catalyst comprises nickel, nickel oxide, magnesium oxide, and silica.
7. The process according to item 1 comprising preheating the natural gas stream by the product mixture.
8. The process according to item 1 comprising generating steam, wherein the generating the steam comprises:
   - feeding a water stream to a firebox;
   - supplying a slip stream of the natural gas stream to the firebox; and
   - burning the slip stream of the natural gas in the firebox to heat the water stream to produce the steam.
9. The process according to item 8, wherein the supplying the slip stream comprises controlling a flow rate of the slip stream based on a temperature in the reformer.
10. The process according to item 1, wherein the process further comprises adjusting a composition of the product mixture by analysing the product mixture and supplying an additional quantity of natural gas to the product mixture to obtain a final product gas mixture having a predefined composition.
11. The process according to item 1, wherein the process further comprises recycling a portion of the final product gas mixture based on an outflow demand of the product mixture.
12. A plant (100) for production of a mixture of hydrogen and natural gas comprising:
   - a heating unit (105) to heat water to produce steam;
   - a reformer (107) with a nickel-based catalyst bed disposed therein, to reform a natural gas stream by the steam to generate a mixture of hydrogen and natural gas, which is substantially carbon monoxide free;
   - a heat exchanger (102) to pre-heat the natural gas stream by the mixture; and
   - a condensing unit (110) to remove excess steam from the product mixture of hydrogen and natural gas.
13. The plant (100) according to item 12, wherein the heating unit (105) is a firebox that is operated by burning a slipstream of the natural gas stream, and wherein the heating unit (105) also heats a portion of the natural gas stream to be reformed.
14. The plant (100) according to item 13 wherein the plant (100) further comprises a control valve (106) that controls a quantity of the natural gas in the slip stream, and wherein the control valve (106) is regulated by a temperature indicator controller (117) that senses the temperature in the reformer (107).
15. The plant (100) according to item 12, wherein the reformer (107) is a fixed-bed vapour- phase down flow reformer.
16. The plant (100) according to item 12 comprising an impurity removal unit (103) with a hydrogen sulphide adsorbing substance disposed therein.

## Claims

1. A process comprising:
- reforming a natural gas stream by steam to form a dry product gas mixture comprising hydrogen and natural gas in presence of a nickel-based catalyst,
wherein the reforming is carried out within a controlled temperature range of about 350°C to 390°C; and at a pressure in a range of about 5 bars to 7 bars, such that all carbon monoxide produced as an intermediate product, is converted to carbon dioxide by the water-gas shift reaction to form a product mixture of hydrogen, carbon dioxide and natural gas free from carbon monoxide; and
- condensing the product gas mixture to separate water as condensate thereby removing steam from the product mixture to obtain a dry product gas mixture.

2. The process as claimed in claim 1, wherein the reforming takes place through two reaction steps:
CH₄ + H₂O → CO + 3 H₂ (1)
and
CO + H₂O → CO₂ + H₂ (2)

3. The process as claimed in claim 2, wherein the reforming is carried out, such that the natural gas, in the form of methane, is reformed by steam in reaction step (1) to produce carbon monoxide as an intermediate product, and wherein the intermediate carbon monoxide subsequently is converted to carbon dioxide in the water-gas shift reaction step (2), such that the product gas mixture of hydrogen, carbon dioxide and natural gas is free from carbon monoxide.

4. The process as claimed in claim 1-3, comprising preheating and subsequently purifying the natural gas stream.

5. The process as claimed in claim 1-4, wherein the reforming is carried out at a gas hourly space velocity on dry basis in a range of about 1500 hr⁻¹ to 2250 hr⁻¹ and/or wherein the nickel-based catalyst comprises nickel, nickel oxide, magnesium oxide, and silica.

6. The process as claimed in claim 1-5, comprising preheating the natural gas stream by the product mixture.

7. The process as claimed in claim 1-6, wherein the steam used for reforming the natural gas is generated by
i. feeding a water stream to a firebox;
ii. supplying a slip stream of the natural gas stream to the firebox; and
iii. burning the slip stream of the natural gas in the firebox to heat the water stream to produce the steam.

8. The process as claimed in claim 7, wherein the supplying the slip stream comprises controlling a flow rate of the slip stream based on a temperature in the reformer.

9. The process as claimed in claim 1-8, wherein the process further comprises adjusting a composition of the product mixture by analysing the dry product mixture and supplying an additional quantity of the treated natural gas to the product mixture after purifying to obtain a final product gas mixture having a predefined composition.

10. The process as claimed in claim 1- 9, wherein the process further comprises recycling a portion of the final product gas mixture based on an outflow demand of the product mixture.

11. A plant (100) for production of a dry product gas mixture comprising:
i. a heating unit (105) configured to heat water to produce steam;
ii. a slip control valve (106) configured to control flow rate of slip stream carried to heating unit (105);
iii. a reformer (107) with a nickel-based catalyst bed disposed therein, configured to reform a natural gas stream by the steam to generate a mixture of hydrogen, carbon dioxide and natural gas, which is free of carbon monoxide;
iv. a temperature indicator controller (117) configured to 1) detect a temperature inside the reformer (107) and based on the detection, and 2) direct the slip control valve to control the flow rate of slip stream such that the temperature inside the reformer is in the range of 350° to 390°C;
v. a heat exchanger (102) configured to pre-heat the natural gas stream by the mixture; and
vi. a condensing unit (110) configured to remove steam from the product mixture to obtain a dry product gas comprising hydrogen and natural gas.

12. The plant (100) as claimed in claim 11, wherein the heating unit (105) is a firebox that is operated by burning a slipstream of the natural gas stream, and wherein the heating unit (105) is configured to also heat a portion of the natural gas stream to be reformed.

13. The plant (100) as claimed in claim 11, wherein the reformer (107) is a fixed-bed vapour- phase down flow reformer.

14. The plant (100) as claimed in claim 11-13, comprising an impurity removal unit (103) with a hydrogen sulphide adsorbing substance disposed therein.

15. The plant (100) as claimed in claim 11-14, wherein the reformer is configured such that the reforming takes place through the following two reaction steps:
CH₄ + H₂O → CO + 3 H₂ (1)
and
CO + H₂O → CO₂ + H₂ (2)
such that the natural gas, in the form of methane, is reformed by steam in reaction step (1) to produce carbon monoxide as an intermediate product, and wherein the intermediate carbon monoxide subsequently is converted to carbon dioxide in the water-gas shift reaction step (2), such that the product gas mixture of hydrogen, carbon dioxide and natural gas is free from carbon monoxide.
